# EUROPEAN PATENT APPLICATION

(11) **EP 2 426 891 A1**
(43) Date of publication of application: **07.03.2012**
(21) Application number: 10189631.4
(22) Date of filing: 02.11.2010
(51) Int. Cl.: H04L 29/08, G06Q 30/00, G06F 17/30, H04L 29/06

(54) **A system to profile and expose mobile subscriber data without compromising privacy**

(30) Priority: 31.08.2010 IN CH25412010
(71) Applicant: Alcatel Lucent, 75007 Paris (FR)
(72) Inventor: K v m, Naidu, 560045, BANGALORE (IN); Govindaraj, Dinesh, 560045, BANGALORE (IN); Nandi, Animesh, 560045, BANGALORE (IN); Narlikar, Girija, 560052, BANGALORE (IN)
(74) Representative: Sciaux, Edmond

(57) **Abstract**

A platform architecture for profiling and exposing mobile subscriber data to third party application providers is disclosed. The present invention relates to telecommunication networks and, more particularly, to providing novel services to both third party application providers and mobile subscribers while preserving subscriber privacy. Existing platforms do not protect subscriber privacy. Also existing systems are not capable of profiling the right set of subscriber for a particular task. As a result most of the time applications are sent to all the subscribers irrespective of the skill, interests, spending patterns etc of the subscriber. The platform disclosed provides services to third party applications by profiling the right set of subscribers based on the third party application requirement. The third party applications can be a part of the platform or run on the platform. The invention also makes use of an anonymized communicator while communicating subscriber data with third party applications protecting subscriber privacy.

## Description

### TECHNICAL FIELD

The present invention relates to telecommunication networks and, more particularly, to subscriber data in telecommunication networks.

### BACKGROUND

Currently, mobile operators have access to location and presence information of a mobile subscriber. Mobile operators also have access to additional demographic information (age, income etc) of subscribers that is provided when a subscriber signs up for a new account. With the proliferation of several value added services offered by mobile operators, many mobile operators also have access to additional information like subscriber's participation in services offered on by those operators on their portals. Such services include wallpaper, ring tones, video downloads, marketing, service promotions and so on. Availability of such information allows the mobile operator to build a richer profile of the subscriber.

Currently, mobile operators expose subscriber information to third party application (OTT) providers to help enable new services and in return get paid by the OTT's. Most of the existing operator's enablers give information about location and presence of a subscriber through subscriber phone number to OTT's. Making location and presence information available to OTT is a potential compromise on privacy of a mobile subscriber. Subscribers also have an option to reveal subscriber information to OTTs. However very few subscribers prefer to reveal personal information and information revealed is mostly limited due to privacy concern.

Further, if an operator shares only location and presence information with OTT's, the supplied information may be sufficient for simple applications like location based advertising, ring tones, wall papers etc but may not be good enough for advanced applications. Such advanced applications may include crowd sourcing applications like consumer surveys, real time service location, mobile application testing and so on. For such applications, availability of subscriber's information like demographics, spending patterns, preferences, skills set etc are needed so that a task can be sent to the right set of subscriber's that can execute the task in the best possible way.

Further existing profiling techniques include user groups and manual collection of data. Many companies hire use groups to test, rate and give feedback on products. The user groups are restricted to specific domains and market. The user groups do not reach all demographics and are expensive. Manual collection is done by individuals who collect information from various demographics for crowd sourcing applications. Information collected though manual collection is not very current as user preferences keeps changing over time. Also it is impossible to scale it to millions of individuals.

### SUMMARY

In view of the foregoing, an embodiment herein provides a platform which can be used in a telecommunication operator network to profile and expose mobile subscriber data to third party application providers, without comprising on the privacy of the subscriber. The platform provides services to both third party application providers and mobile subscribers. The platform contains a secondary data repository, a data mining module, subscriber matching module, and an anonymized communicator. The platform receives the primary information like name, age, contact information etc. from the primary data repository of the operator network. The secondary data repository stores all the applications accessed by the subscriber using the platform. The platform not only has access to primary subscriber data of millions of registered mobile subscribers but also to dynamically changing secondary subscriber data of each user. The third party application providers can request for a list of subscribers based on specific criteria match. The data mining module searches for the right set of subscribers matching the requested criteria in the primary and secondary subscriber data repository. The anonymized communicator anonymizes the identity of the subscribers found by assigning a subscriber handle for each subscriber. The subscriber handles are then sent to the third party application provider. The third party application provider can then communicate with the subscribers using the subscriber handle.

Also, disclosed herein is a method for profiling and exposing mobile subscriber data to third party application providers like information service provider. Third party application providers can request for recommendations and ratings from like minded users for specific businesses. The subscriber matching module with the help of data mining module, primary data repository and secondary data repository finds the recommendations and rating given by like minded subscribers. The list of recommendations and ratings along with the list of like minded subscriber is given to the third party applications through subscriber handles assigned by the anonymized communicator. The third applications can store the subscriber handles information in their data repository. Individual mobile subscriber can also request for information regarding specific businesses. These requests are sent using subscriber handles to third party application providers to protect subscriber identity who then respond back with information using subscriber handles.

These and other aspects of the embodiments herein will be better appreciated and understood when considered in conjunction with the following description and the accompanying drawings.

### BRIEF DESCRIPTION OF THE FIGURES

The embodiments herein will be better understood from the following detailed description with reference to the drawings, in which:

FIG. 1 is a block diagram of a telecommunication network where the platform can be implemented;

FIG. 2 is the architecture of the platform which can be implemented in a mobile operator network according to embodiments as disclosed herein;

FIG. 3 shows a flow chart explaining how a crowd sourcing application can be performed using the platform , according to embodiments as disclosed herein; and

FIG. 4 shows a flowchart explaining how information service provider interacts with subscriber and benefits from using the platform gateway, according to embodiments as disclosed herein.

### DETAILED DESCRIPTION OF EMBODIMENTS

The embodiments herein and the various features and advantageous details thereof are explained more fully with reference to the non-limiting embodiments that are illustrated in the accompanying drawings and detailed in the following description. Descriptions of well-known components and processing techniques are omitted so as to not unnecessarily obscure the embodiments herein. The examples used herein are intended merely to facilitate an understanding of ways in which the embodiments herein may be practiced and to further enable those of skill in the art to practice the embodiments herein. Accordingly, the examples should not be construed as limiting the scope of the embodiments herein.

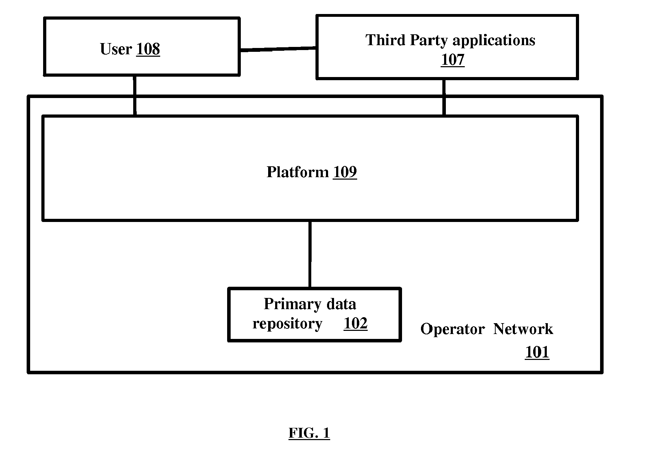

FIG. 1 is a block diagram illustrating an example of a telecommunication network in which the platform 109 can be implemented. The Platform 109 is implemented in an operator network 101. The platform essentially contains software applications built on servers. The platform 109 is implemented on the operator network 101 exposes a set of APIs (Application Programming Interface), wherein the API's makes use of operator network assets for third party application providers 107. The platform 109 can provide third party application providers 107 with Java APIs and web services for assisting in developing mobile applications. The platform 109 may make use of open standard in both web services (UDDI, WDSL, SOAP) and communication network interfaces (OSA/Parlay). The Platform 109 can provide a single point of secure access into the operator network 101 for third part application providers 107.

The user 108 is a subscriber of the operator network 101. The mobile operator collects a lot of information about subscribers while issuing new connection and thereafter. This data includes name, age, address, location and presence etc. This resides in the primary data repository 102. The platform receives primary data about subscribers from the primary data repository 102. This data is accessible using existing operator enablers like GMLC, presence, CRM, NDS, BI etc.

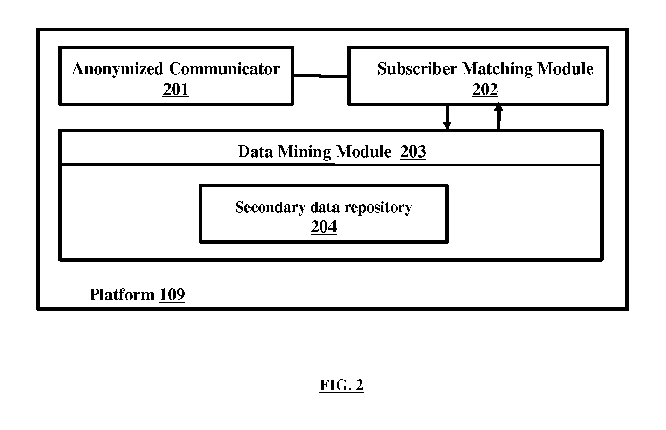

FIG.2 is the architecture of the platform 109 which can be implemented in a mobile operator network 101 according to embodiments .The platform architecture comprises of a secondary data repository 204, a data mining module 203, an anonymized communicator 201 and a subscriber matching module 202. The secondary data repository 103 contains information collected over time based on the applications used by the user through the platform 109. For example, in a mobile crowdssourcing application the platform collects information about ability of different subscriber's to do different tasks. The secondary data repository 103 helps in defining the interests, skills, needs etc of a subscriber. This data can be exposed to third party application providers in a secure way can help them in providing new services which are more in tune with the interests and skills of subscribers.

The data mining module 104 processes the information available from the primary data repository 102 and in the secondary data repository 103 to find a set of subscriber's that match a desired criteria requested by the third party application providers. The matching criteria can be a parameter match or a subscriber match. The data mining module 104 receives queries from the subscriber matching module 106 and sends back responses to it. The data mining techniques may include classification, clustering, collaborative filtering, sequenced mining, graphical mining etc of the primary and secondary data repository.

The anonymized communicator 105 is responsible for anonymizing and de-anonymizing subscriber identity by assigning temporary subscriber handles to each subscriber while communicating with third party applications 107. Subscriber's can also request for a subscriber handle for themselves, which they can pass on to the applications. Applications can then perform actions like sending SMS etc using the subscriber handle as well as use their handle in their queries to the platform.

The subscriber matching module 106 receives queries from third party application 107 providers. These queries request subscriber match based on certain parameters like demographics, age, spending patterns, location, presence, travel patterns and many others. The matching criteria can be a parameter match or a subscriber match. The data mining module 104 receives queries from the subscriber matching module 106 and sends back responses to it. The data mining techniques may include classification, clustering, collaborative filtering, sequenced mining, graphical mining etc of the primary and secondary data repository.

The subscriber matching module 106 sends the criteria to the data mining module 104 which processes the information available from the primary data repository 102 and in the secondary data repository 103 to find a set of subscriber's that match a desired criteria requested by the third party application providers .The set of subscribers found matching the criteria are then sent to the subscriber matching module 106. The subscriber matching module 106 sends the set of subscribers to anonymized communicator 105 which assigns subscriber handles for each subscriber in the set. The anonymized set of subscriber handles are then sent to the subscriber matching module 106, which returns the anonymized set of subscribers to the querying third party application 107 providers. The subscriber matching module 106 provides an interface through which the data mining module 104, anonymized communicator 105 and third party application 107 providers communicate

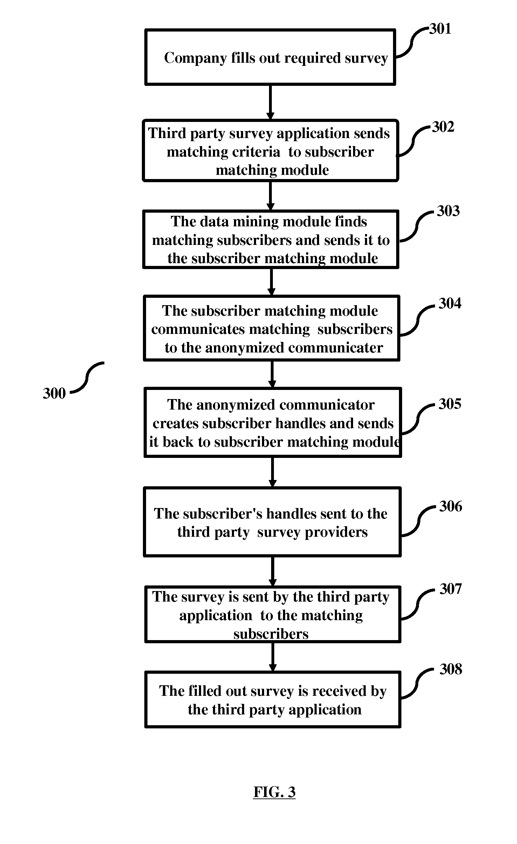

FIG. 3 is a flow chart showing an example how third party web based survey companies can benefit from using the platform, according to embodiments as disclosed herein. The company requiring a survey to be done fills (301) a survey form on a third party survey provider web site. The third part survey 107 application sends (302) the matching criteria to the subscriber matching module 106. The matching criteria can be a parameter match or a subscriber match. For a parameter match, the third party application provider 107 can provide any of the parameters and specify the exact value or range of the parameter. For a subscriber match, the third party application provider can specify a particular subscriber as a criteria and request for similar or dissimilar subscriber matches. The subscriber matching module 106 communicates the matching criteria to the data mining module 104, which finds (303) out the best set of subscribers based on the criteria specified by the third party survey provider 107. The set of subscribers found are then sent (303) back to the subscriber matching module 106. The subscriber matching module 106 then communicates (304) this set of subscribers to the anonymized communicator 105 which anonymizes (305) the subscribers by providing subscriber handles. The subscriber handles are then sent (305) to the subscriber matching module 106, which communicates (306) the subscriber handles to the third party 107 application providers. The third part survey application 107 then sends (307) the survey to the subscribers using subscriber handles and receives (308) the filled out surveys from the subscribers. The survey is sent to the subscribers who can fill the survey in the best possible manner. Surveys like these give the company an insight into user's interests, information which can be used to offer customized products and service to the user. As the platform is part of a service operator network, the number of people the survey can reach is higher. The platform sends across a list of subscriber through subscriber handles ensuring that subscriber identity information is kept private.

The anonymized communicator 105 is responsible for protecting the subscriber identity by assigning temporary subscriber handles to each subscriber for communicating with third party applications. The subscriber matching module 106 provides an interface through which the data mining module 104, anonymized communicator 105 and third party application 107 providers communicate. When a third party application provider requests for a match by giving a criteria, it is sent to the subscriber matching module 106, which sends the criteria to the data mining module 104 which processes the information available from the primary data repository 102 and in the secondary data repository 103 to find a set of subscriber's that match a desired criteria requested by the third party application providers. The set of subscribers found matching the criteria are then sent to the subscriber matching module 106. The subscriber matching module 106 sends the set of subscribers to anonymized communicator 105 which assigns subscriber handle for each subscriber in the set. The various actions in method 300 may be performed in the order presented, in a different order or simultaneously. Further, in some embodiments, some actions listed in FIG. 3 may be omitted.

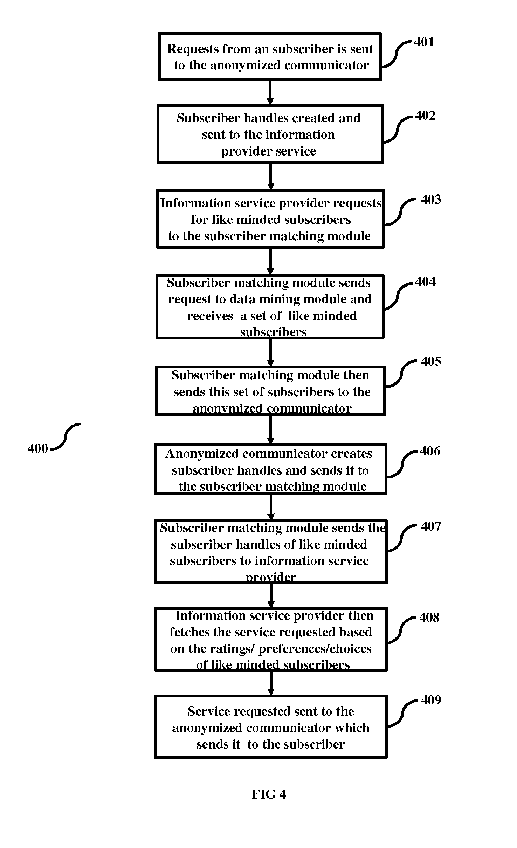

FIG. 4 shows a flowchart explaining how information service provider interacts with subscriber and benefits from using the platform. The information providing services may be a business directory like Yellow Pages, a website offering directory information or any other equivalent service. Request for a service from a subscriber is received (401) by the anonymized communicator 105. The service requested may be information on restaurants, businesses, health care providers, beautifiers etc. A subscriber handle is created (402) for the mobile subscriber by the anonymized communicator 105 and the subscriber handle is then sent to the information service provider. The information service provider requests (403) the subscriber matching module 106 for a list of likeminded subscribers whose subscriber data depicts that they might be interested in fields related to the request. The subscriber matching module 105 sends the request to the data mining module 103 which intelligently mines (404) the primary data repository 102 and the secondary data repository 103 to find the right set of likeminded subscribers and sends (404) the response to the subscriber matching module 106. The set of likeminded subscribers are sent (405) to the anonymized communicator 105 which creates subscriber handles for each of the like minded subscriber and sends (406) them to the subscriber matching module 106. The subscriber matching module then sends (407) the set of likeminded subscriber handles to the information service providers. The information service providers can store the subscriber handles for future references in their database. The information service provides then fetches (408) the service requested by the subscriber from its data repository based on the ratings/preferences/choices/recommendation etc of likeminded subscriber handles. The information service providers may fetch the best rated business from an internal storage means or an external storage means. The requested service is then sent (409) by the information service provider to the subscriber via the anonymized communicator. The various actions in method 400 may be performed in the order presented, in a different order or simultaneously. Further, in some embodiments, some actions listed in FIG. 4 may be omitted.

The foregoing description of the specific embodiments will so fully reveal the general nature of the embodiments herein that others can, by applying current knowledge, readily modify and/or adapt for various applications such specific embodiments without departing from the generic concept, and, therefore, such adaptations and modifications should and are intended to be comprehended within the meaning and range of equivalents of the disclosed embodiments. It is to be understood that the phraseology or terminology employed herein is for the purpose of description and not of limitation. Therefore, while the embodiments herein have been described in terms of preferred embodiments, those skilled in the art will recognize that the embodiments herein can be practiced with modification within the spirit and scope of the claims as described herein.

## Claims

1. A method of profiling and exposing mobile subscriber data to third party application providers in an telecommunication operator network using a platform, the method comprising the steps of:
receiving request for a criteria match from a third party application provider;
mining primary and secondary mobile subscriber data to find a set of subscriber's matching the requested criteria;
assigning a subscriber handle for each of the subscribers found; and
sending the subscriber handles to the third party application.

2. The method of claim 1 further comprising the step of receiving primary mobile subscriber data from primary data repository of the telecommunication operator network.

3. The method of claim 1 further comprising the step of receiving secondary mobile subscriber data from the recorded applications used by the subscriber through the platform.

4. The method of claim 1 wherein primary mobile subscriber data comprises of
age of a subscriber;
name of a subscriber; and
contact information of a subscriber.

5. The method of claim 1 wherein secondary mobile subscriber data comprises of:
ability of users to finish task;
mobile web browser activity related to the user;
services requested by the user; and
rating and recommendations given by the user.

6. The method of claim 1 wherein the criteria match is at least one of
a parameter; and
an individual mobile subscriber's data.

7. The method of claim 1 wherein subscriber handles are assigned for each subscriber to protect the identity of the mobile subscriber.

8. A platform providing novel services to third party application providers and mobile subscribers in an telecommunication operator network, the platform comprising at least one means adapted for:
receiving request for a criteria match from a third party application provider;
mining primary and secondary mobile subscriber data to find a set of subscribers matching the criteria;
assigning a subscriber handle for each of the subscriber found; and
sending the subscriber handles to the third party application.

9. The platform of claim 8 wherein primary mobile subscriber data is received from primary data repository of the telecommunication operator network.

10. The platform of claim 8 wherein the secondary mobile subscriber data is received from recorded applications used by the subscriber through the platform.

11. The platform of claim 8 wherein the subscriber handle is assigned by an anonymized communicator.

12. The platform of claim 8 wherein the mining of the primary and secondary mobile subscriber data is done by a data mining module.
